# EUROPEAN PATENT APPLICATION

(11) **EP 4 497 942 A1**
(43) Date of publication of application: **29.01.2025**
(21) Application number: 23187627.7
(22) Date of filing: 25.07.2023
(51) Int. Cl.: F03D 1/06

(54) **SERRATED PANEL FOR A WIND TURBINE ROTOR BLADE**

(71) Applicant: Nordex Energy SE & Co. KG, 22419 Hamburg (DE)
(72) Inventor: LIPKA, Thomas, 22419 Hamburg (DE); Rautmann, Christof, 22419 Hamburg (DE)
(74) Representative: Hauck Patentanwaltspartnerschaft mbB

(57) **Abstract**

A serrated panel for a wind turbine rotor blade, comprising:
• at least two teeth, each having a tip, a base, a length measured in a chordwise direction, a pressure side, a suction side and two edges having an edge height measured between the suction side and the pressure side, and
• a plurality of tines arranged in a chordwise direction, the tines extending rearwards from an edge of a tooth and having a tine width and a tine height, wherein
• the tines have a cross-section with a first straight section forming a suction side of the tine and defining the tine width, and an opposite section forming a pressure side of the tine,
• the suction side of the tine transfers smoothly into the suction side of the tooth,
• the tine height is larger than the edge height, and
• the pressure side of the tine extends in a forward direction beyond the edge of the tooth.

## Description

The invention relates to a serrated panel for the trailing edge of a wind turbine rotor blade.

These panels have been suggested for noise reduction in wind turbines. The panels are designed with a series of teeth placed along the trailing edge of the wind turbine rotor blade, which can help to reduce aerodynamic noise generated by the rotor blade. In particular, the serrations on the trailing edge of a wind turbine rotor blade change the local flow behavior at the trailing-edge and the interaction of turbulent vortices with the trailing-edge, thereby reducing the overall noise level produced by the wind turbine.

Studies have shown that the use of serrated panels can reduce the noise level of wind turbines significantly. This can help to make wind turbines more acceptable to local communities by reducing the impact of noise pollution.

A wind turbine rotor blade with a serrated panel at the trailing edge has become known from the document DE 10 2011 056 491 A1. The panel has a number of triangular teeth, and a plurality of bristles extending from rear edges of the teeth.

From the document WO 2018/130651 A1 a wind turbine rotor blade with a trailing edge noise reduction device has become known. The noise reduction device comprises a panel with a number of teeth and multiple bristles.

From the document EP 3 268 605 B1, a wind turbine rotor blade with a serrated panel having teeth and a plurality of tines arranged side by side in a chordwise direction, each tine beginning at an edge of a tooth and extending rearwards.

From the document EP 3 426 914 B1 a wind turbine rotor blade with a serrated panel having teeth and tines beginning at edges of the teeth and extending rearwards has become known. In addition to the tines, the teeth are provided with ridges on a suction side or on a pressure side.

Departing therefrom, it is an object of the invention to provide a serrated panel being easy to manufacture and offering improved noise reduction.

This problem is solved by the serrated panel with the features of claim 1. Preferred aspects are given in the dependent claims.

The serrated panel for a trailing edge of a wind turbine rotor blade comprises:
- at least two teeth, each tooth having a tip, a base, a length measured in a chordwise direction between the base and the tip, a pressure side, a suction side and two edges running from the tip to the base, wherein the edges have an edge height measured between the suction side and the pressure side, and
- a plurality of tines arranged side by side in a chordwise direction, the tines extending rearwards from an edge of a tooth and having a tine width and a tine height, wherein
- the tines have a cross-section with a first straight section forming a suction side of the tine and defining the tine width, and an opposite section forming a pressure side of the tine,
- the suction side of the tine transfers smoothly into the suction side of the tooth the tine is extending from,
- the tine height is larger than the edge height of the tooth the tine is extending from, and
- the pressure side of the tine extends in a forward direction beyond the edge of the tooth the tine is extending from.

The panel is for a trailing edge of a wind turbine rotor blade and has a longitudinal direction. The teeth are arranged in a row along the longitudinal direction. The panel will be arranged with reference to the rotor blade such that the panel's longitudinal direction is aligned with the trailing edge of the rotor blade. The panel's longitudinal direction then extends substantially along a spanwise direction of the rotor blade. The spanwise direction is perpendicular to the chordwise direction of the rotor blade.

The wind turbine rotor blade has an aerodynamic profile with a pressure side and a suction side. When the serrated panel is attached to the wind turbine rotor blade, the teeth will be arranged such that their pressure sides transfer (preferably smoothly) into the pressure side of the wind turbine rotor blade, and such that their suction sides transfer (preferably smoothly) into the suction side of the wind turbine rotor blade.

The outer contour of each tooth is formed by the two edges, each running from the tip to the base. The teeth may each have a triangular shape with straight edges and a sharp tip. Nevertheless, the tip may also be rounded, and/or the edges may be curved as well. Each tooth has a longitudinal extension (measured in the chordwise direction of the rotor blade) which may be larger than a width (measured in the lengthwise direction of the rotor blade) of the tooth. The teeth may be arranged with or without spacings between adjacent teeth.

The serrated panel has a plurality of tines each having the shape that is defined in claim 1. Preferably, all of the tines the panel comprises are configured in this specific manner. However, the panel may comprise additional tines having different shapes, for example one or more tines arranged in a spacing between adjacent teeth.

The tines are elongated elements each beginning at an edge of a tooth and extending from there rearwards in a chordwise direction, substantially corresponding to an aerodynamic flow direction. The tines might not be arranged exactly in chordwise direction, for example when using distinct angles in the individual panels and due to varying angles of the trailing edge with referene to the pitch axis. Deviations of for example +/- 10° or +/- 5° are possible. The tines have a certain stiffness, so that in operation they may be deformed by the aerodynamic flow to a certain degree only. In particular, the tines' stiffness may be greater than a stiffness of thin fibres or bristles that have also been used in the prior art to influence the aerodynamic flow. The tines have a tine width, which is measured along the longitudinal direction of the panel, perpendicular to the chordwise direction, and a tine height, which is measured in the direction of the edge height (i.e., between the suction side and the pressure side).

The tines have a cross-section with a first straight section forming a suction side of the tine, so that the suction side of the tine is formed by an essentially flat surface. This may be true along the entire length of the tine, but in particular in a length section which transfers smoothly into the suction side of the tooth the tine is extending from. "Transferring smoothly" here means that between the suction side of the tooth and the suction side of the tine, there is no step and preferably also no angle or noticeable curvature, so that the aerodynamic flow can follow the outer surface of the panel smoothly.

The tine height is larger than the edge height of the tooth where the tine is extending from, and the pressure side of the tine extends in a forward direction beyond the edge of this tooth. In other words, the tine does not begin strictly at the edge, but has a pressure side-section arranged on the pressure side of the tooth. This section is an integral part of the tine.

The noise-mitigating effect of a serrated panel is a complex process. The dimensions of the teeth used in known serrated panels are related to typical length scales of the flow, such as to a boundary layer thickness. However, the geometrical boundary conditions in particular in combination with tines added to the teeth are complex, and many different length scales may occur in the boundary layer, wherein each length scale will create noise in a certain frequency range. As a consequence, the overall noise is not tonal, but broadband, and the most promising noise mitigating strategy must address different length scales and frequencies.

The inventors realised that the cross-sectional shape of the tines and how the relevant aerodynamic surfaces of the teeth and the tines are arranged with reference to one another is important for the noise mitigating effect. On the other hand, the mechanical properties of the tines and how they respond in operation to aerodynamic forces is important as well. It was found that the specific shape of the tines and their "pressure-side"-sections described above provide superior noise mitigation.

In an aspect, the cross-section has two straight, lateral sections connecting the first straight section and the opposite section. The lateral sections may be arranged parallel to each and perpendicular to the first straight section. A sharp, 90° edge may be formed between the first straight section and each adjacent lateral straight section. It is believed this cross-sectional shape will lead to a relatively undisturbed, smooth flow on the suction side of the serrated panel, where air coming from the wind turbine blade's suction side will mix with air coming from the wind turbine blade's pressure side and flowing through the spacings between adjacent tines.

In an aspect, a spacing between adjacent tines is in a range of 75 % to 125 % of the tine width. This was found to provide the highest level of noise mitigation.

In an aspect, the opposite section forming the pressure side of the tine is rounded. In general, the opposite section of the cross section can have a straight shape or a roof shape as well, for example, with or without rounded corners where the opposite section meets the lateral sections. However, a rounded shape of the opposite section, such as a half-circular shape or an elliptical shape, was found to enhance the flow not only on the pressure side of the tines, but also on the suction side, where the flow passing though the spacings between adjacent tines seems to be less disturbed.

In an aspect, the cross-section is constant between the edge of the tooth the tine is extending from and a rear end of the tine. In other words, the tines' main longitudinal sections, which extend from an edge of a tooth in a rearward direction up to the tine's rear ends, have a simple and constant cross-section. This is easy to manufacture and provides good mechanical properties to the tines, including sufficient stiffness.

In an aspect, the pressure side of the tine extending in the forward direction beyond the edge of the tooth the tine is extending from forms a straight continuation of the pressure side of the tine in a section of the respective tine rearwards of the edge. In particular, not only the pressure side, but parts of the lateral surfaces of the tines as well may extend in the forward direction beyond the edge of the tooth the tine is extending from. They may form straight continuations of the lateral surfaces of the tine in a section of the respective tine rearwards of the edge. This means the entire section of the tine arranged forward of the edge of the tooth may be a smooth continuation of the tine arranged rearward of the edge. The cross-section of the tine is maintained forward of the edge, except for those parts of the cross-section filled by the tooth. The smooth extension of the tines on the pressure side surface of the teeth was found to support the noise mitigation effect.

In an aspect, the edge of a tooth, seen in a chordwise section in a spacing between adjacent tines, has a sharp edge on the suction side and/or is rounded on the pressure side. This specific shape was found to support a smooth air flow through the spacings. In an aspect, the teeth, seen in a transverse section, have a height that has a maximum at a centre line and decreases towards the edges. The centre line is a midline of the respective tooth arranged in a (substantially) chordwise direction. This shape of the teeth provides structural and aerodynamic advantages.

In an aspect, the teeth, seen in a chordwise section, have a height that has a maximum at the base and decreases towards the edge. The height of the teeth may decrease also from the maximum at the base in a forward direction. Overall, the pressure side of the teeth may have a pyramid-like appearance with two triangular, planar surfaces and an apex arranged on the centre line. Two rearward base lines of the pyramid correspond to the edges of the tooth. The forward-half of the pyramid may be arranged forward of the tooth, and may have two forward base lines. The suction side of the teeth, in contrast, may be flat.

In an aspect, the teeth have a maximum height that is larger than the tine height. This means the tines arranged near the centre line of a tooth will transfer smoothly into the pressure side of the tooth.

In an aspect, the tine height is larger than the tine width, in particular by a factor of 1.1 or more. This was found to provide improved mechanical strength to the tines, so that good noise mitigation is achieved in combination with long-term stability. In particular, the tine height may be larger than the tine width by a factor of 1.5 or more, by a factor of 2.0 or more, or even by a factor of 3.0 or more. This allows using a suitable number of sufficiently stiff tines, in particular in combination with small teeth.

In an aspect, at least some of the tines extend in a forward direction beyond the base of the tooth the respective tine is extending from, wherein these tines in particular have a ramp section transferring smoothly into a pressure side of the serrated panel. This imparts sufficient strength to the tines even where the teeth have a very limited height, in combination with good noise mitigation.

In an aspect, the ramp section has a slope in the range of 10° to 30° with reference to a pressure side of an attachment section of the serrated panel. This slope is a good compromise between aerodynamic and mechanical properties.

In an aspect, the serrated panel has an attachment surface at a suction side and an alignment rim for positioning the serrated panel at a trailing edge of a wind turbine rotor blade. This makes it easy to mount the serrated panel to a wind turbine rotor blade exactly in the desired position, in particular using an adhesive.

The invention will be explained in greater detail with reference to the following drawings:
- Fig. 1: shows a wind turbine rotor blade with a serrated panel in a perspective view,
- Fig. 2: shows a serrated panel in a top view, wherein the tines are not shown,
- Fig. 3: shows a section of the serrated panel of Fig. 2 with tines in a perspective view on the pressure side,
- Fig. 4: shows the section of the serrated panel of Fig. 3 in a perspective view on the suction side,
- Fig. 5: shows the section of the serrated panel of Fig. 3 in a top view on the pressure side,
- Fig. 6: shows the section of the serrated panel of Fig. 3 in a side view,
- Fig. 7: shows an enlarged view of the section of the serrated panel of Fig. 3 in a perspective view on the pressure side, partly in cross-section,
- Fig. 8: shows an enlarged view of the section of the serrated panel of Fig. 3 in a perspective view on the pressure side, partly in chordwise-section,
- Fig. 9: shows a section of another serrated panel with tines in a perspective view on the pressure side,
- Fig. 10: shows a section of the serrated panel of Fig. 9 in a perspective view on the suction side,
- Fig. 11: shows the section of the serrated panel of Fig. 9 in a side view.

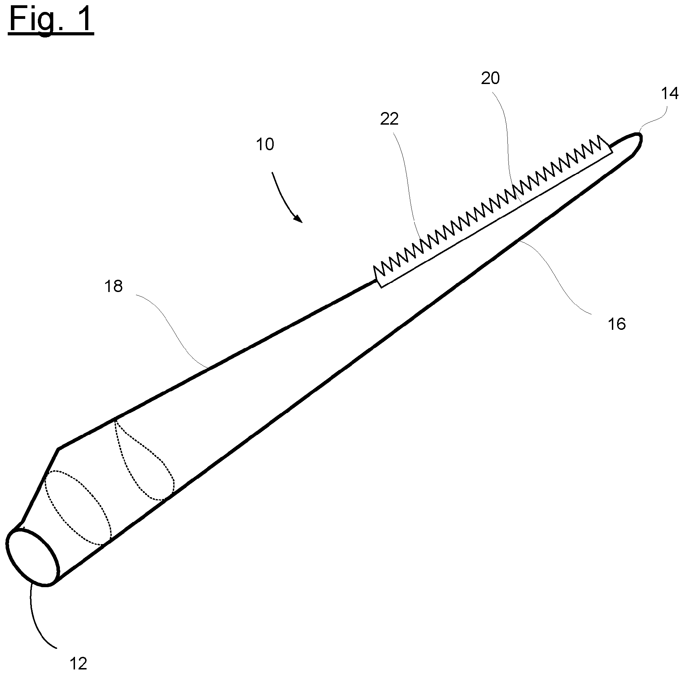

Figure 1 shows a wind turbine rotor blade 10 having a blade root 12, a blade tip 14, a leading edge 16 and a trailing edge 18. In cross-section, the wind turbine rotor blade 10 has an aerodynamic profile. The spanwise direction extends from the blade root 12 towards the blade tip 14. The chordwise direction extends perpendicular to the spanwise direction from the leading edge 16 towards the trailing edge 18.

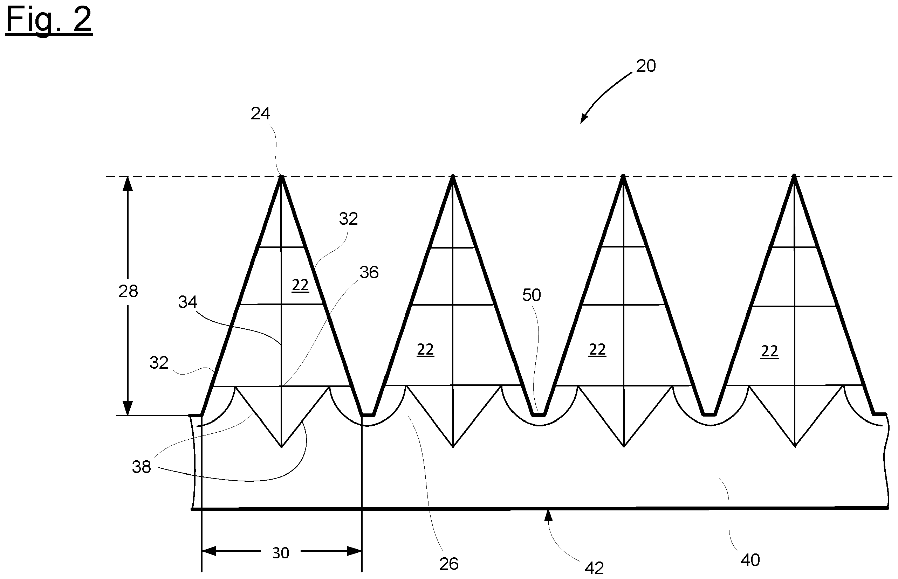

An outer length section of the wind turbine rotor blade is provided with a serrated panel 20, which is attached to an outer surface of the wind turbine rotor blade 10 and has a plurality of teeth 22. The serrated panel 20 is positioned such that the bases 26 (see Fig. 2) of the teeth 22 are aligned with the trailing edge 18.

Figure 2 shows a section of the serrated panel 20 of Fig. 1, wherein the tines are not shown for clarity purposes. The serrated panel 20 has teeth 22, each tooth 22 has a tip 24 and a base 26. A length 28 of a tooth 22 is measured in chordwise direction between the tip 24 and the base 26. A width 30 of a tooth 22 is measured in spanwise direction. A small gap 50 is formed between the bases 26 of each pair of adjacent teeth 22.

Forward of the teeth 22, the serrated panel 20 has a fastening section 40 with an attachment surface 42, which is arranged at the back of the panel 20, in Fig. 2 directed away from the viewer.

The teeth 22 have the shape of an equilateral triangle, wherein both edges 32 meeting at the tip 24 have the same length. The teeth 22 each have a centre line 34 running in the chordwise direction, along the length of the respective tooth 22. The pressure side of the teeth 22, facing the viewer in Fig. 2, has a pyramid-like shape, with an apex 36 on the centre line 34. Two rearward base lines of the pyramid are formed by the edges 32. Two forward base lines 38 are arranged forward of the tooth 22. From each of the forward base lines 38 and from each of the rearward base lines, a triangular, planar surface extends up to the apex 36.

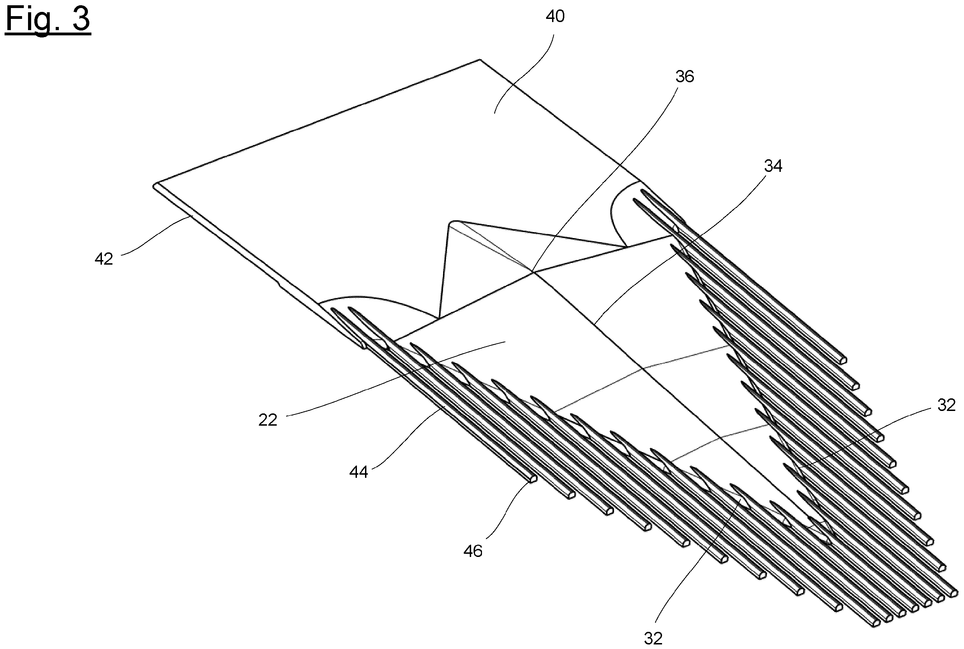

Figure 3 shows a section of the serrated panel 20 comprising one tooth 22 in a perspective view. In this view, one may better appreciate the pyramid-like shape with the apex 36 and the four triangular, planar surfaces formed on the pressure side.

Moreover, Fig. 3 shows a plurality of tines 44 arranged side-by-side in the chordwise direction. The tines 44 are extending rearwards from an edge 32 of the tooth 22 to a rear end 46. The tines 44 have a constant cross section from the edge 32 to the rear end 46.

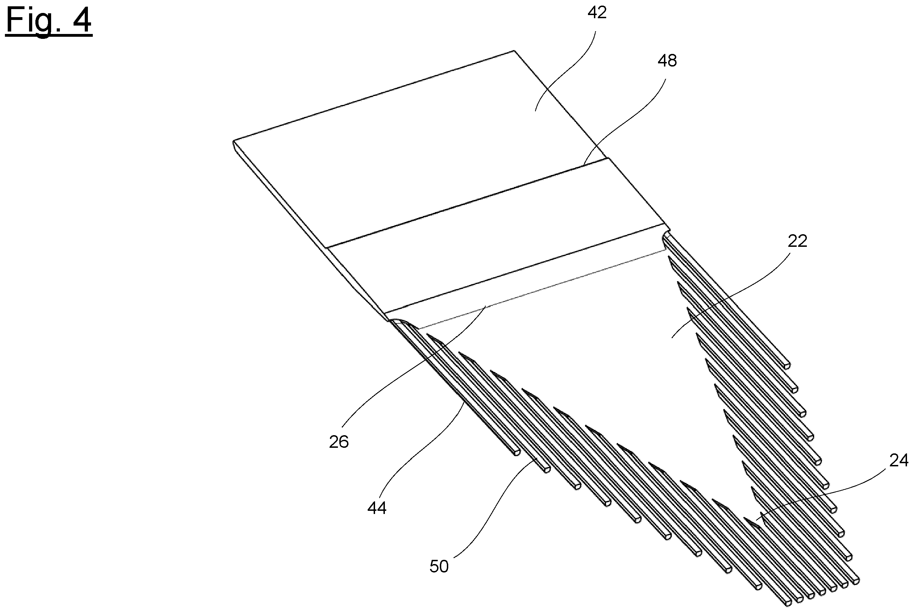

Figure 4 shows the same section of the serrated panel 20 of Fig. 3 in a perspective view on the suction side. In this view, one can see the attachment surface 42 ending at an alignment rim 48. The suction side of the tooth 22 is planar, from the base 26 to the tip 24. The tines 44 have a flat suction side 50 which transfers smoothly into the suction side of the tooth 22.

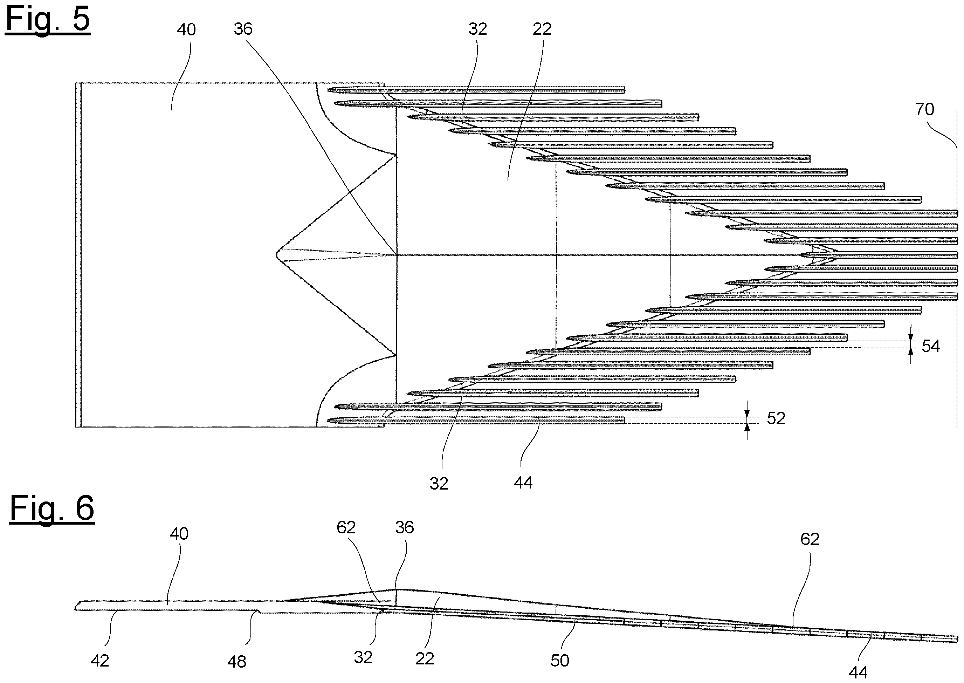

Figure 5 shows the section of the serrated panel 20 of Fig. 3 in a top view on the pressure side. In this view, one can best see the tines 44 have a tine width 52 which has approximately the same size as a spacing 54 between adjacent tines. One can also see most of the tines 44 have the same length, except for some tines 44 arranged at or close to the tip 24, which are shorter. These shorter tines 44 end at a straight line 70 arranged rearwards of the tip 24.

In the side view of Fig. 6, one can see once more that the suction side of the tooth 22 transfers smoothly into the suction side 50 of the tines 44.

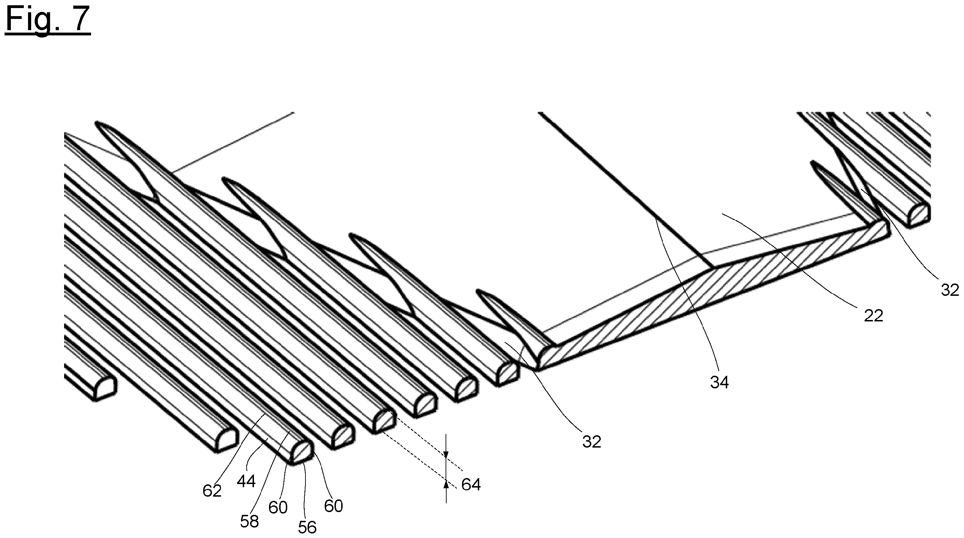

Figure 7 shows the tines 44 in greatest detail. The tooth 22 and the tines 44 are shown in cross-section. The cross-section of each tine 44 has a first straight section 56 forming a suction side 50 of the tine 44 and defining the tine width 52, two straight lateral sections 60, and an opposite section 58 which is rounded and forms a pressure side 62 of the tine 44. The tine 44 has a tine height 64 which is larger than the tine width 52.

With regard to the teeth 22, Fig. 7 shows the tooth 22 has, when seen in transverse section as illustrated in Fig. 7, a height that has a maximum at the centre line 34 and decreases towards the edges 32.

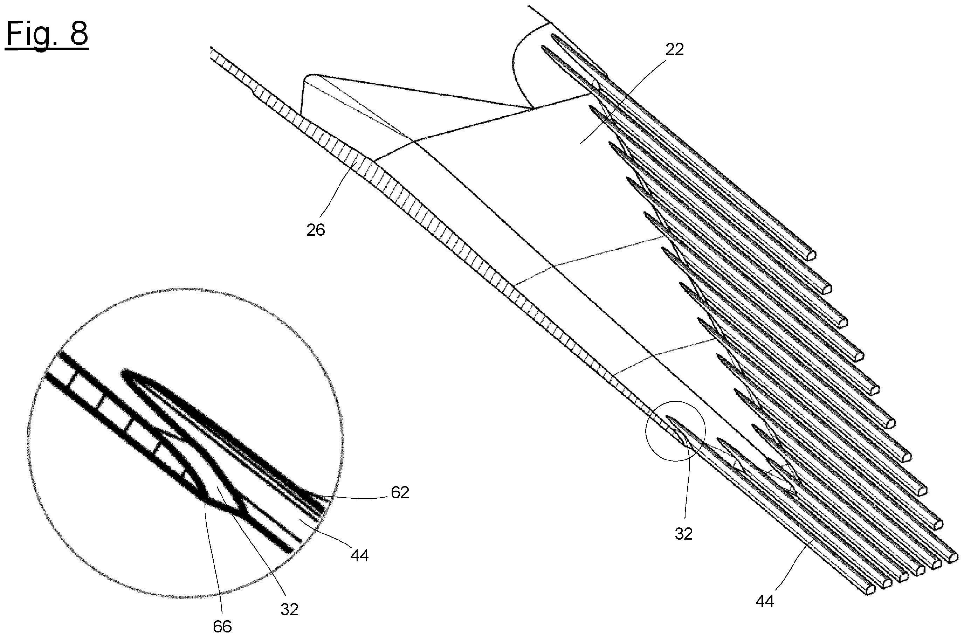

Figure 8 shows a longitudinal section of the same section of the serrated panel 20. In this view, one can see the tooth 22 has, when seen in a chordwise section as illustrated in Fig. 8, a height that has a maximum at the base 26 and decreases towards the edge 32. The encircled, enlarged view to the left shows the edge 32 of the tooth 22 within a spacing 54 between adjacent tines 44 in greater detail. One can see that in the illustrated, chordwise section, the edge 32 has a sharp edge 66 on the suction side, while it is rounded on the pressure side.

In addition, one can see the pressure side 62 of the tine 44 extends in in a forward direction beyond the edge 32 of the tooth the tine 44 is extending from. The pressure side 62 of the tine 44 extending in the forward direction beyond the edge 32 of the tooth 22 the tine is extending from forms a straight continuation of the pressure side 62 of the tine 44 in a section of the respective tine 44 rearwards of the edge 32.

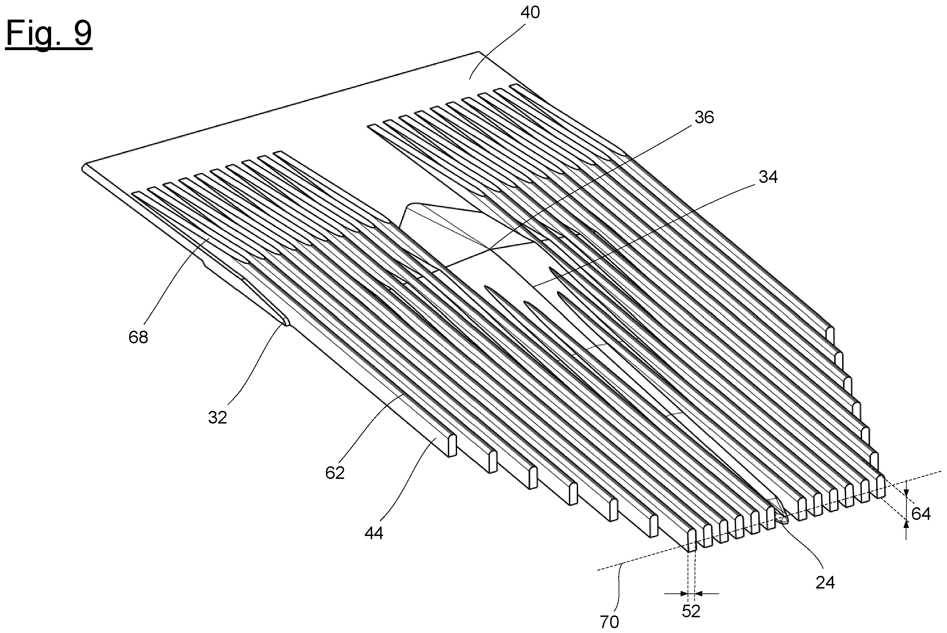

Figure 9 shows another one-tooth section of another serrated panel 20. The teeth 22 of this panel have the same shape as described with reference to Figs. 2 to 8. The tines 44, however, differ. In particular, they have a tine height 64 much larger than the tine width 52, in particular by a factor of two or more. The tooth 22 has a maximum height at the apex 36. This maximum height is larger than the tine height 64.

The pressure sides 62 of the tines 44 extend over a larger area over the pressure side of the tooth 22. The pressure side 62 of the tine 44 extending in the forward direction beyond the edge 32 of the tooth 22 the tine is extending from is also much longer, but still forms a straight continuation of the pressure side 62 of the tine 44 in a section of the respective tine 44 rearwards of the edge 32. As the tine height 64 is larger than the height of the tooth 22 is in a distance from the centre line 34, the tines 44 extend forward not only beyond the edge 32, but beyond the base 26 of the tooth 22 as well. To form a smooth transfer into the pressure side of the fastening section 40, the tines 44 in this area are provided with a ramp section 68 on their pressure side.

In the Figs. 9 to 11, the tines 44 arranged close to the centre line 34 are shorter than the tines 44 arranged further away from the centre line 34, and end at a straight line 70 that is connecting the tips 24 of adjacent teeth 22.

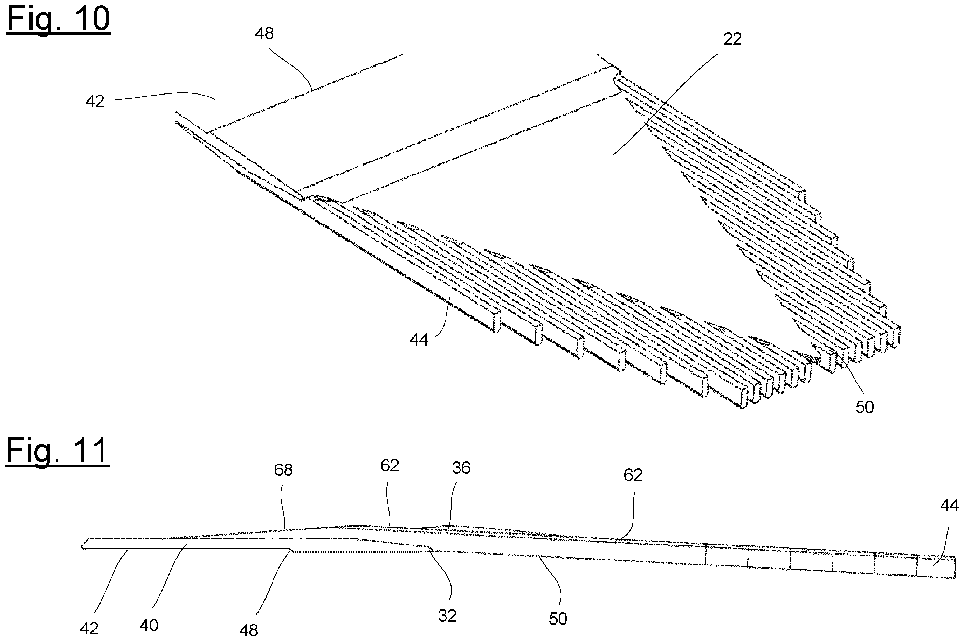

Figure 10 shows a perspective view on the suction side of the section of the serrated panel of Fig. 9. Again, the suction sides 50 of the tines 44 transfer smoothly into the suction side of the tooth 22.

Figure 11 shows a side view also illustrating this smooth transfer on the suction side. Further, one can see the pressure side 62 of the tines, and that the same has two sections, rearward and forward of the edge 32, wherein the section forward of the edge 32 is a straight continuation of the section rearward of the edge 32. The ramp section 68 can also be seen.

### List of reference numerals:

- 10: wind turbine rotor blade
- 12: blade root
- 14: blade tip
- 16: leading edge
- 18: trailing edge
- 20: serrated panel
- 22: tooth
- 24: tip
- 26: base
- 28: length of a tooth
- 30: width of a tooth
- 32: edge
- 34: centre line
- 36: apex
- 38: forward base line
- 40: fastening section
- 42: attachment surface
- 44: tine
- 46: rear end
- 48: alignment rim
- 50: suction side of tine
- 52: tine width
- 54: spacing
- 56: first straight section
- 58: opposite section
- 60: lateral section
- 62: pressure side of tine
- 64: tine height
- 66: sharp edge
- 68: ramp section
- 70: straight line

## Claims

1. A serrated panel (20) for a trailing edge (18) of a wind turbine rotor blade (10), the serrated panel (20) comprising:
• at least two teeth (22), each tooth (22) having a tip (24), a base (26), a length (28) measured in a chordwise direction between the base (26) and the tip (24), a pressure side, a suction side and two edges (32) running from the tip (24) to the base (26), wherein the edges (32) have an edge height measured between the suction side and the pressure side, and
• a plurality of tines (44) arranged side by side in a chordwise direction, the tines (44) extending rearwards from an edge (32) of a tooth (22) and having a tine width (52) and a tine height (64), wherein
• the tines (44) have a cross-section with a first straight section (56) forming a suction side (50) of the tine (44) and defining the tine width (52), and an opposite section (58) forming a pressure side (62) of the tine (44),
• the suction side (50) of the tine (44) transfers smoothly into the suction side (50) of the tooth (22) the tine (44) is extending from,
• the tine height (64) is larger than the edge height of the tooth (32) the tine (44) is extending from, and
• the pressure side (62) of the tine (44) extends in a forward direction beyond the edge (32) of the tooth (22) the tine (44) is extending from.

2. The serrated panel (20) of claim 1, wherein the cross-section has two straight, lateral sections (60 connecting the first straight section (56) and the opposite section (58).

3. The serrated panel (20) of claim 1 or 2, wherein a spacing (54) between adjacent tines (44) is in a range of 75 % to 125 % of the tine width (52).

4. The serrated panel (20) of any of the claims 1 to 3, wherein the opposite section (58) forming the pressure side (62) of the tine (44) is rounded.

5. The serrated panel (20) of any of the claims 1 to 4, wherein the cross-section is constant between the edge (32) of the tooth (22) the tine (44) is extending from and a rear end (46) of the tine (46).

6. The serrated panel (20) of any of the claims 1 to 5, wherein the pressure side (62) of the tine (44) extending in the forward direction beyond the edge (32) of the tooth (22) the tine (44) is extending from forms a straight continuation of the pressure side (62) of the tine (44) in a section of the respective tine (44) rearwards of the edge (32).

7. The serrated panel (20) of any of the claims 1 to 6, wherein the edge (32) of a tooth (22), seen in a chordwise section in a spacing (54) between adjacent tines (44), has a sharp edge (66) on the suction side and/or is rounded on the pressure side.

8. The serrated panel (20) of any of the claims 1 to 7, wherein the teeth (22), seen in a transverse section, have a height that has a maximum at a centre line (34) and decreases towards the edges (32).

9. The serrated panel (20) of any of the claims 1 to 8, wherein the teeth (22), seen in a chordwise section, have a height that has a maximum at the base (26) and decreases towards the edge (32).

10. The serrated panel (20) of any of the claims 1 to 9, wherein the teeth (22) have a maximum height that is larger than the tine height (64).

11. The serrated panel (20) of any of the claims 1 to 10, wherein the tine height (64) is larger than the tine width (52), in particular by a factor of 1.1 or more.

12. The serrated panel (20) of any of the claims 1 to 11, wherein at least some of the tines (44) extend in a forward direction beyond the base (26) of the tooth (22) the respective tine (44) is extending from, wherein these tines (44) in particular have a ramp section (68) transferring smoothly into a pressure side of the serrated panel (20).

13. The serrated panel (20) of claim 12, wherein the ramp section (68) has a slope in the range of 10° to 30° with reference to a pressure side of an attachment section (40) of the serrated panel (20).

14. The serrated panel (20) of any of the claims 1 to 13, wherein the serrated panel (20) has an attachment surface (42) at a suction side and an alignment rim (48) for positioning the serrated panel (20) at a trailing edge (18) of a wind turbine rotor blade (10).
